# EUROPEAN PATENT SPECIFICATION

(11) **EP 3 418 695 B1**
(45) Date of publication and mention of the grant of the patent: **16.09.2026**
(21) Application number: 18159285.8
(22) Date of filing: 28.02.2018
(51) Int. Cl.: G05G 1/08, G01P 13/04, G01D 5/28

(54) **CONTROLLER**
STEUERGERÄT
ORGANE DE COMMANDE

(30) Priority: 01.03.2017 GB 201703308
(43) Date of publication of application: 26.12.2018
(73) Proprietor: AQUALISA PRODUCTS LIMITED, Westerham, Kent TN16 1DE (GB)
(72) Inventor: Euluri, Anoor, Westerham, Kent TN16 1DE (GB); Harris, Stephen, Westerham, Kent TN16 1DE (GB)
(74) Representative: J A Kemp LLP

(56) References cited:
- EP-A2- 3 054 302
- WO-A1-2009/103596
- CN-A- 104 662 801
- DE-A1- 102006 036 908
- DE-A1- 102014 010 786
- DE-A1- 102015 116 957
- US-A1- 2005 164 623
- US-A1- 2016 378 322

## Description

The present invention relates to a controller for a water related system, such as an electronic shower, and a water related system including such a controller.

Many water related systems require interaction with fluid and require the use of user-operable inputs. Many water related systems require the use of a controller to allow the user to control specific characteristics of water flow within the water related system. For example, the controller may allow a user input to control the temperature and/or flow rate of water flow in the water related system.

US 2005/164623, DE 10 2015 116957, WO 2009/103596 and US 2016/378322 disclose background art.

It is known to provide conventional mechanical controllers, for example, a controller operable using spring mechanisms. Such known controllers can take up a lot of space resulting in a bulky device. Furthermore, for use in a wet environment, extra precautions must be taken to seal controllers from that environment and the user. Furthermore, it is known that degradation over time may be expedited by a surrounding wet environment.

According to the present invention, there is provided a controller in accordance with claim 1.

The present invention is based on an understanding of issues relating to the use of a controller in a wet environment. The present invention provides a control unit comprising a sensor as part of a controller configured to reduce the effect of the wet environment on the sensor and on the durability of the controller.

The characteristic of water flow being controlled may be the temperature of the water flow and/or flow rate of the water flow. Control of certain characteristics of water, such as the temperature of water in a shower system, may be of high importance and may require a robust controller with a minimum required degree of accuracy. Temperature control, for example, has associated health and safety implications, thus the control of such a characteristic requires a controller which is capable of meeting minimum accuracy and durability requirements. The input may relate to a desired value of the characteristic of the water flow being controlled. In this way, the input member may be used to directly control characteristics of the water flow in the system. The input may be used to navigate menu options provided by the controller.

By providing a control unit and an input member as in the present invention, the sensor can be maintained in a dry environment such that the integrity of the sensor is maintained. Additionally, the reflectors used to reflect the signal towards the detecting unit may be cleaned or interchanged as required without affecting the control unit comprising the sensor. This can be easily done by providing the input member as a component which is separate to the control unit i.e. as a component which can be moved or rotated relative to the control unit.

The controller comprises a housing, wherein the housing comprises the control unit and the input member is separate from the housing. In this way, the input member may be moved independently of the control unit and the control unit may be provided in a way such that the environment and the housing of the control unit may be controlled to reduce the impact of the surrounding wet environment on the sensor.

The reflector is arranged to have reflecting portions configured to reflect the signal and non-reflecting portions configured to not reflect the signal. Thus, the reflector can be arranged to reflect the signal in a predetermined manner depending on the relative rotation of the input member to the control unit. Providing reflecting and non-reflecting portions of the reflector allows the sensor to determine the amount of rotation of the input member.

Preferably the reflecting portions of the reflector may be formed using reflective coating, reflective labels and/or reflective stickers. Additionally or alternatively the non-reflecting portions may be formed using non-reflective coating, non-reflective labels and/or non-reflective stickers. The reflector may be formed as a reflective band wherein portions of non-reflective material are placed over respective portions of the reflective band. The reflector may be provided using any of these methods depending on availability, price, and/or durability, etc..

The input member is preferably ring-shaped. This allows the input member to be positioned around the outside of the control unit. This may be beneficial because the input member may form an outer housing of the control unit and thus, the user can use the outer housing of the controller itself as an input member, rather than additional buttons or switches, to control certain characteristics of water flow in the water related system.

The input member is configured to rotate about a main axis. This allows movement of the input member relative to the control unit in a predetermined path of motion. This may make it easier for the relative movement to be detected and reduces the likelihood of errors.

The reflector may be arranged in different ways in order to reflect the signal back to the detecting unit. For example, the reflector may be arranged substantially parallel to the main axis or the reflector may be arranged in a plane substantially perpendicular to the main axis. Arranging the reflector in either of these ways means that various different configurations for the reflector on the input member and the location of the input member with respect to the controller may be provided, for example, depending on a preferred design or shape of the overall controller.

The characteristic of water flow being controlled may be the temperature of the water flow and/or the flow rate of the water flow. Other characteristics may alternatively or additionally be controlled. As previously described, it may be beneficial to provide accurate control for certain characteristics such as the temperature.

The input member is configured to rotate about a main axis and the reflecting portions are arranged in a radial pattern around the main axis. In this way, different radial patterns may be provided which allow the sensor to determine the relative rotation of the input member. The pattern may be a repeating pattern. The pattern may be formed with uniform reflecting portions and/or uniform non-reflecting portions.

The pattern has a phase and the control unit comprises two sensors, wherein the second sensor is positioned with respect to the first sensor and the pattern such that the sensors are out of phase with each other with respect to the pattern.

The controller may be incorporated in any appropriate water related system or device, particularly those to be situated in wet environments. The controller is particularly useful in an electronic unit. The present invention further provides a water related system comprising a controller as described above.

The invention will be more clearly understood from the following description, given by way of example only, with reference to the accompanying drawings, in which:-
Figure 1a illustrates in plan view a controller for a water related system in accordance with the first embodiment;
Figures 1b and 1c depict exemplary signals detected by a sensor and a further sensor respectively;
Figure 2 illustrates the input member depicted in Figure 1;
Figure 3 illustrates a variation of the input member depicted in Figure 1;
Figure 4 illustrates a cross section of a variation of the first embodiment depicted in Figure 1;
Figure 5 illustrates a cross section of a controller according to a second embodiment in accordance with the invention;
Figure 6 depicts an input member as depicted in Figure 5;
Figure 7 depicts a cross section of a variation of the controller depicted in Figure 5;
Figure 8 depicts a controller in accordance with a third embodiment not according to the invention;
Figure 9 depicts an input member as depicted in Figure 8; and
Figure 10 depicts a water related system using a controller according to the present invention.

The same references are used for similar features throughout the drawings. The features shown in the figures are not necessarily to scale and the size or arrangements depicted are not limiting. It will be understood that not all of the features of the controller are depicted on each figure and the figures may only show a few of the components relevant for a describing a particular feature.

The present invention can be useful for any water related system, especially one that requires the controller to be positioned in a wet environment, i.e. to interact with water or a very humid environment. The present invention provides a controller that can be used to control water flow in a water related system and wherein the controller can be sealed effectively from the wet environment.

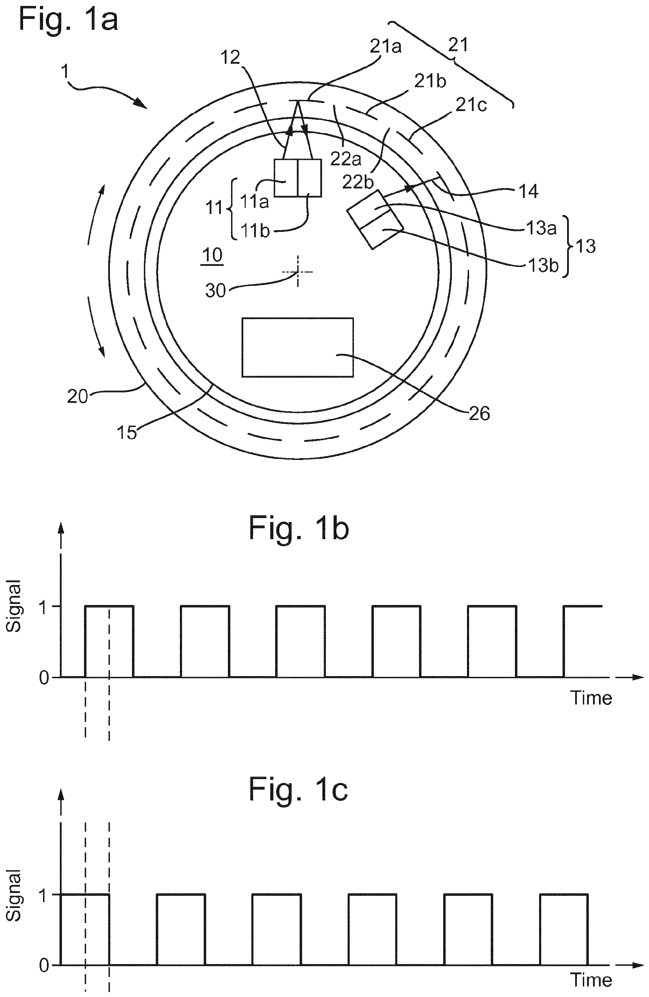

Figure 1a illustrates a configuration of a controller 1 in accordance with a first embodiment. The controller 1 is provided for a water related system. The controller 1 is configured to control a characteristic of water flow in the water related system. The controller 1 comprises a control unit 10 comprising a sensor 11. The sensor 11 comprises an emitting unit 11a configured to emit a signal 12 and a detecting unit 11b configured to detect signal 12. The controller 1 also comprises an input member 20 being movable relative to the control unit 10. Preferably, the input member 20 is rotatable relative to the control unit 10. The input member 20 comprises a reflector 21 arranged to reflect a signal 12 towards detecting unit 11b. As the input member 20 is rotated relative to the control unit 10, the controller 1 is configured to determine the relative rotation of the input member 20 based on the reflected signal 12. The controller 1 is configured to determine an input based on the relative movement, or more particularly, rotation of the input member 20.

The input may relate to a desired value of the characteristic of water flow being controlled by the controller 1. For example, a desired set value such as a desired temperature or desired flow rate. Alternatively, the input may relate to various controls to navigate options, for example menu options, provided by the controller. For example, the input may correlate to a movement in a list of options. The options may be displayed on a user interface 26, e.g. a display screen. The user interface 26 is depicted in Figure 1a, but may not be included in the controller 1 of Figure 1a and/or may be included in the controller depicted in any of the other figures. Thus, for example, the input may be used to navigate options to allow selection of a value of a characteristic of water flow, or may be used navigate options relating to settings of the controller 1, such as time and date settings. The user may easily navigate the options displayed using the input member 20 to make an input.

As depicted in Figure 1a, in this embodiment, more than one sensor is provided. A further sensor 13 is depicted wherein the further sensor 13 comprises a further emitting unit 13a and a further detecting unit 13b. The further emitting unit 13a is configured to emit a further signal 14 and the further detecting unit 13b is configured to detect the further signal 14. Movement of the input member 20 relative to the control unit 10 is indicated by the arrows depicted in Figure 1a. As can be seen in Figure 1a, the reflector 21 comprises multiple reflecting portions, e.g. reflecting portions 21a, 21b, 21c, etc.. As indicated, the input member 20 comprises the reflector 21 and thus, as the input member 20 is rotated with respect to the control unit 10, the reflector 21 also rotates with respect to the control unit 10. This means that the reflecting portions 21a, 21b, 21c rotate relative to the sensor 11 and the further sensor 13. It is noted that three reflecting portions 21a, 21b and 21c have been labelled for indication only and these portions are representative of reflecting portions around the whole circumference or relevant surface of the input member 20. As the reflecting portions 21a, 21b, 21c are moved with respect to the detecting unit 11b and the further detecting unit 13b, the signal 12 and the further signal 14 received will change as the reflecting portions 21a, 21b, 21c move relative to the detecting unit 11b and the further detecting unit 13b respectively (i.e. relative to the control unit 10). In this way, the sensor 11 and the further sensor 13 may be used to detect movement of a separate component (i.e. the input member 20) of the controller 1.

The control unit 10 comprises a housing 15. The housing may be used to contain the other components of control unit 10, for example the sensor 11 and the further sensor 13. Thus, the control unit is sealed by the housing with respect to the surrounding environment. This means that the housing 15 may be used to maintain a dry internal environment. In this way, the components of the control unit 10 may be protected from the potential negative effects of being positioned in a wet environment.

As depicted in Figure 1a, the input member 20 is separate from the housing 15. Thus, the input member 20 can be moved independently from the housing 15. This allows the input member 20 comprising the reflector 21 to be moved in the wet environment without affecting any seal maintaining a dry environment within the housing 15. In other words, the input member 20 may be external to the housing 15. It would be understood by the skilled person that the input member 20 being external to the housing 15 means that the input member 20 is outside of the housing 15. As will be described in further detail below in relation to further figures, the input member 20 may in fact be located in a recess of the housing 15, for example. However, the input member 20 will still be considered to be outside of the housing as the input member 20 does not breach the housing 15 or affect the internal environment of the housing 15. The input member 20 may even pass through the housing 15 as long as the input member 20 is separate from and external to the environment within the housing 15.

The input member 20 may rotate around a main axis 30. As depicted by the arrows in Figure 1a, the input member 20 may rotate in a clockwise and/or an anti-clockwise direction. Thus, the controller 1 may be used to determine the relative rotation of the input member 20 with respect to the control unit 10. The controller 1 may be used to determine the direction of rotation of the input member 20 and also the relative amount of rotation of the input member 20 with respect to the control unit 10. Therefore, in the present invention, the controller 1 can be used to distinguish between different directions of relative rotation of the input member 20. This may be done in different ways. It is useful to determine direction of relative movement because different directions may indicate different inputs, for example, clockwise movement of the input member 20 relative to the control unit 10 may indicate an increase in a desired value or an upward movement of a selection on a list displayed by the controller 1, whereas anti-clockwise movement may indicate a decrease in a desired value or a downward movement of a selection on a list displayed by the controller 1 (or vice versa).

The reflector 21 is arranged to have reflecting portions, such as 21a, 21b and 21c, configured to reflect the signal 12 and the further signal 14, and non-reflecting portions 22a, 22b, configured to not reflect the signal 12 and the further signal 14. Only non-reflecting portions 22a and 22b have been labelled, however, these are representative of non-reflecting portions around the whole circumference or relevant surface of the input member 20. As depicted in Figure 1a, the non-reflecting portions 22a, 22b are areas between the reflecting portions 21a, 21b, 21c. The signal detected by the detecting unit 11b and the further detecting unit 13b may be as depicted in Figures 1b and 1c respectively. For example, in the first embodiment, two sensors, i.e. the sensor 11 and the further sensor 13 may be used. Figure 1b depicts an exemplary signal 12 detected by detecting unit 11b. As indicated by Figure 1b, the signal 12 may be reflected by the reflector 21 and detected by detector 11b at periodic intervals. The signal 12 is depicted as being detected when at 1 or not detected at 0 where the values used here are representative of receiving reflected signal 12 at 1 and not receiving reflected signal at 0. Thus, the portions of increased signal show times when the signal 12 has been reflected by the reflecting portions 21a, 21b, 21c and the portions of reduced or zero signal relate to times when the signal 12 has not been reflected by the non-reflective portions 22a, 22b. Figure 1c depicts an exemplary further signal 14 detected by detecting unit 13b in a similar manner to Figure 1b.

As depicted in Figures 1b and 1c, the signal 12 and further signal 14 detected by the sensor 11 and the further sensor 13 respectively may be out of phase with each other i.e. the signal and further signal may not be aligned with one another. This may be achieved by positioning the second sensor 13 at a predetermined location with respect to the first sensor 11 such that the signal detected by the detecting units 11b and 13b are out of phase with each other as depicted in Figures 1b and 1c. Providing the signals out of phase with each other means that the detected signals may be used to detect the direction of the relative movement of the input member 20 with respect to the control unit 10. The relative location of the sensor 11 and the further sensor 13 may be known, as well as the length of the reflecting portions 21a, 21b, 21c and the non-reflecting portions 22a, 22b around the input member 20. The controller 1 can determine which direction the input member 20 is being moved in using the out of phase signals received by the detecting units 11b and 13b. The signals 12 and 14 may be 90° out of phase with one another as depicted in Figures 1b and 1c. This is preferable because it makes the detection more reliable, but may be difficult to achieve. If the sensor 11 and the further sensor 13 are positioned in phase with each other, the amount of relative rotation between the input member 20 and the control unit 10 may still be determined, i.e. by determining the variation in signal detected by the detecting unit 11b or the further detecting unit 13b.

The reflector 21 may be arranged to have reflecting portions 21a, 21b, 21c of a predetermined length interspersed with non-reflecting portions 22a, 22b, etc. of a predetermined length. Each of the reflecting portions 21a, 21b, 21c may be of a different predetermined length, or some or all may be the same predetermined length. Each of the non-reflecting portions 22a, 22b may be of a different predetermined length, or some or all may be the same predetermined length. Preferably, the predetermined lengths of the reflecting portions 21a, 21b, 21c and the non-reflecting portions 22a, 22b are long enough that each portion can be accurately detected, but short enough that small movements of the input member 20 can be determined.

The reflecting portions 21a, 21b, 21c and non-reflecting portions 22a, 22b may be formed in a pattern. The pattern may have uniform reflecting portions 21a, 21b, 21c, i.e. the uniform reflecting portions 21a, 21b, 21c may be substantially the same size as each other. In other words, the pattern may have reflecting portions which are of the same width as each other in plan view, i.e. the length of the reflecting portions may be substantially uniform as depicted in Figure 1a. Additionally or alternatively, the non-reflecting portions 22a, 22b may be substantially uniform, i.e. the length of the non-reflecting portions 22a, 22b between the reflecting portions 21a, 21b, 21c may be substantially the same size as each other. Additionally or alternatively, the length of the reflecting portions 21a, 21b, 21c may be substantially the same as the length of the non-reflecting portions 22a, 22b. Thus, each of the reflecting portions 21a, 21b and 21c may be substantially the same size as the non-reflecting portions 22a and 22b.

However, it is not necessary for the pattern to be a repeating pattern or to be uniform. Thus, the reflecting portions 21a, 21b, 21c may be non-uniform with each other, the non-reflecting portions 22a, 22b may be non-uniform with each other, and/or the reflective portions 21a, 21b, 21c may be non-uniform with the non-reflective portions 22a, 22b. In other words, the size of the reflecting portions 21a, 21b, 21c and/or the non-reflecting portions 22a, 22b may vary and may not form a pattern, and may not be the same size as other portions.

The controller 1 may determine the movement of the input member 20 from the detected signals detected by detecting unit 11b and the further detecting unit 13b. Thus, if the length of each of the reflecting portions 21a, 21b and 21c and the non-reflecting portions 22a and 22b is known e.g. if it is predetermined, this allows the signals detected by the detecting unit 11b and the further detecting unit 13b to be easily compared to the known lengths of reflecting portions 21a, 21b, 21c and known lengths of non-reflecting portions 22a, 22b. Thus, the controller 1 can compare the detected signal 12 and further signal 14 to the predetermined lengths and the relative movement of the input member 20 can be easily determined.

Various different types of sensor may be used as sensor 11 and further sensor 13. Sensor 11 and further sensor 13 may be the same as each other, or they may be different. Different types of sensors may be used to generate a signal 12 and further signal 14 of different types. For example, at least one of the signal 12 and the further signal 14 could be optical, infrared, or ultrasonic.

The housing 15 may be configured to allow the signal to pass through it. The housing 15 may be entirely translucent or transparent or at least a portion of the housing 15 may be translucent or transparent. This may be useful if at least one of the signal 12 and/or the further signal 14 is an optical signal. The housing may only be transparent or translucent in an area through which the signal 12 and/or the further signal 14 are expected to pass through, for example, near or adjacent the sensor 11 and/or further sensor 13.

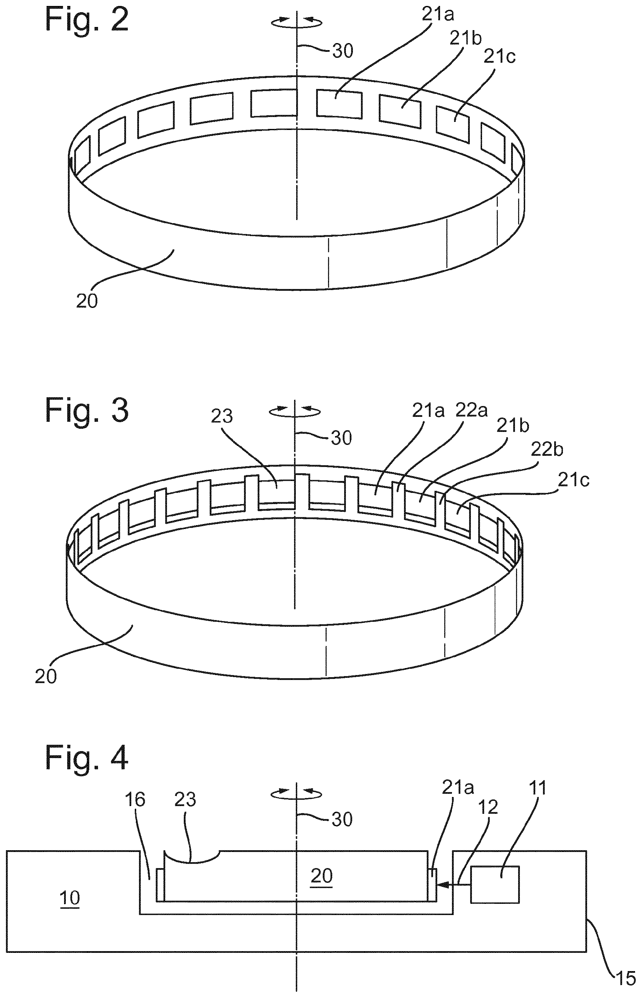

The reflecting portions 21a, 21b, 21c may be provided in various different ways. For example, the reflecting portions 21a, 21b, 21c may correspond to portions of the input member 20 which have been coated using reflective finish, e.g. reflective paint. Alternatively, portions of reflecting material may be attached to the input member 20 using an adhesive. Thus, the reflecting portions 21a, 21b, 21c may be provided as reflective labels using an adhesive and/or stickers comprising an adhesive. A detailed illustration of the input member 20 is depicted in Figure 2. As in Figure 2, the reflecting portions 21a, 21b, 21c may be provided on an inside surface of the input member 20.

The non-reflective portions 22a, 22b may be provided in various different ways. For example, the non-reflective portions 22a, 22b may correspond to portions of the input member 20 which have been coated using non-reflective finish, e.g. non-reflective paint. Alternatively, portions of non-reflecting material may be attached to the input member 20 using an adhesive. Thus, the non-reflective portions 22a, 22b may be provided as non-reflective labels using an adhesive and/or stickers comprising an adhesive. For example, the input member 20 may be generally reflective around the inside and non-reflective portions 22a, 22b may be provided on an inside surface of the input member 20.

Alternatively, the reflector 21 may be provided as a reflective strip or band. Such a reflector is depicted in Figure 3. Non-reflective material may be placed over portions of the reflective strip 23 such that non-reflecting portions 22a and 22b are provided, for example, as depicted in Figure 3. For example, the non-reflective portions may be provided by the input member 20 as depicted in Figure 3, as protrusions or a patterned component of the input member 20. In this example, the reflective strip 23 may be positioned inside the input member 20 to provide reflecting portions 21a, 21b and 21c. Alternatively, non-reflective material may be placed over portions of the reflective strip 23 such that non-reflecting portions 22a and 22b are provided, for example using non-reflective labels using an adhesive and/or stickers comprising an adhesive and/or a non-reflective coating. The non-reflective labels and/or coating could be positioned around the reflective strip 23 to provide non-reflecting portions 22a and 22b in the desired locations.

The reflective portions may be made from a variety of materials, e.g. metal, and preferably stainless steel. Metal, and particularly stainless steel, is beneficial because they are less likely to react in wet environments.

The input member 20 could be formed as a single integral component. The input member 20 may be formed by components which are combined, for example welded and preferably ultrasonically welded, together.

As depicted in Figures 1a, 2 and 3 the input member 20 is configured to rotate about the main axis 30. The main axis 30 may be determined with respect to the control unit 10. The main axis 30 may preferably be an axis through the centre of the control unit 10, around which the input member 20 rotates. Thus, the main axis 30 may otherwise be referred to as a central axis. The main axis 30 may be perpendicular to the plan view of the control unit 20 depicted in Figure 1a. In the first embodiment, the reflector 21 is arranged substantially parallel to the main axis 30. Thus, the surface of the reflector 21 used to reflect the signal 12, 14 is substantially parallel to the main axis 30. In this configuration, the reflector 21 may be positioned to reflect the signal 12 and the further signal 14 in a direction substantially perpendicular to the main axis 30.

The input member 20 may be substantially ring-shaped. For example, the input member 20 may be formed as, or similar to, a bezel. The input member 20 being ring-shaped means that the input member can be easily rotated and moved by a user. For example, the input member 20 may be placed around the outside of the control unit 10 as depicted in Figure 1a. Thus, the input member 20 may form an outer portion of the controller 1 which can be used as a way of inputting a selection by the user. This negates the need for a separate input button for the user to input their request. Furthermore, having this particular shape may be preferable to other shapes as it is more pleasant and easy to use by the user because they can easily fit their hand around the ring-shape than, for example, having a square-shaped input member 20.

The input member 20 does not have to be around the outside of the housing 15 of the controller 1. For example, the controller 1 could be configured as depicted in Figure 4 in which the input member 20 is provided within a recess 16 of the control unit 10. In this example the input member 20 is external to the control unit 10. In other words, even though the input member 20 is provided within the recess 16, the input member 20 is not positioned inside the housing 15. The sensor 11 may be located in the control unit 10, as depicted in Figure 4, i.e. radially outwards of the input member 20. The further sensor 13 (not depicted) may also be located radially outwards of the input member 20. As in Figure 4, the reflector 21 may be located on or as part of an outer surface of the input member 20 such that the signal 12 and the further signal 14 can be emitted from the sensors 11 and the further sensor 13 respectively and detected by the respective detecting unit 11b and the further detecting unit 13b.

In this variation, the input member 20 may optionally comprise a feature to help the user rotate the input member 20 with respect to the control unit 10. For example, as depicted in Figure 4, a finger recess 23 may be provided to allow a user to insert their finger to improve a user's grip on the input member. Alternatively, a small handle, which optionally rotates may be provided. Alternatively, the user may simply grip the input member 20 and no feature may be provided. The input member 20 may optionally be positioned such that the input member 20 protrudes from the housing 15 (i.e. is not flush with the housing 15 at the top of the input member 20 as depicted in Figure 4) to allow the user to more easily grip the input member 20.

As previously described, the present invention may be particularly useful when applied to an electronic shower unit e.g. a digital shower unit. However, it would be understood that the controller 1 may be used to a control a characteristic of water flow for a variety of different water related systems. For example, the water related system could instead refer to a bathroom tap, kitchen tap, an instantaneous water heater (such as an electronic shower unit), bath or a lavatory. The controller 1, 101, 201 may be part of a smart home water system control, for example, to control a sanitary unit.

Thus, the characteristics of water flow being controlled may vary or alter and will depend on which characteristics need to be controlled for a particular water related device. For example, the controller 1 may be configured to control the temperature of water flow and/or flow rate of the water flow. This may be of particular importance when the water related device is a shower.

In the first embodiment, two sensors are provided. However, if only the amount of movement, rather than the direction and amount of movement are to be determined by the controller, only one sensor, i.e. the sensor 11 or the further sensor 13, may be used. Alternatively, additional sensors may be provided in addition to the sensor 11 and further sensor 13 described above.

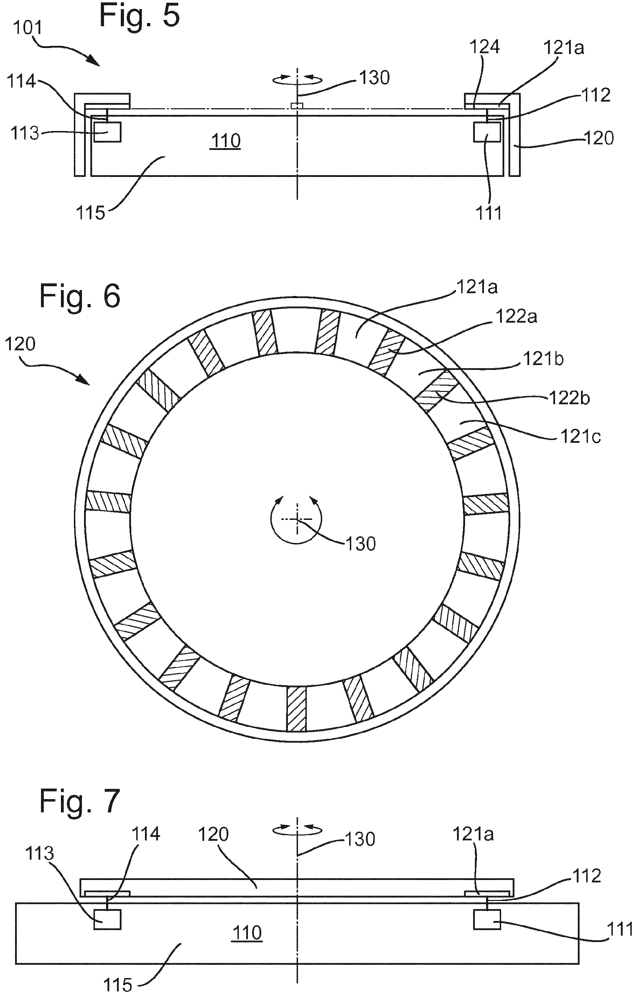

A second embodiment is now described in relation to Figures 5, 6 and 7. The second embodiment may be substantially the same as the first embodiment except as herein described. In the second embodiment, instead of the reflector 21 being provided substantially parallel to the main axis, in the present embodiment, the reflector 121 may be provided substantially perpendicular to the main axis.

As depicted in Figure 5, the reflector (indicated by reflecting portion 121a in Figure 5) may be provided having a surface 124 substantially perpendicular to the main axis 130. In this embodiment the sensor 111 and further sensor 113 may be configured to emit and detect the signals 112 and 114 in a different orientation than described above in the first embodiment. The sensor 111 and the further sensor 113 may be positioned to direct the signal 112 and the further signal 114 respectively in a different direction such that the signal 112 and the further signal 114 are directed towards the surface of the reflector 121. Thus, in the present invention as the input member 120 is rotated relative to the control unit 110, the rotation of the reflecting portions such as 121a, 121b, 121c will be determined in the same way as described above for the first embodiment.

A view of the input member 120 from beneath the controller 101 depicted in Figure 5 is depicted in Figure 6. The view can be considered as a view from below the controller, if the control unit 115 is removed. The input member 120 could be located anywhere sensible with respect to the control unit 110. For example, the input member 120 may be positioned such that the reflector 121 is located above the control unit 110 as depicted in Figure 5 and the user may grip a top portion near the reflector 121. Alternatively, the input member 120 may be located the other way around so that the reflector 121 is below the control unit 115 and the user may grip the input member 120 at the sides.

As depicted in Figures 5 and 6, at least a part of the input member 120 may be provided around the outside of the control unit 110. However, this is not necessarily the case. A variation is depicted in Figure 7 in which the input member 120 is provided as a component of the controller 1 facing a surface of the housing 115 of control unit 110 rather than surrounding it as in Figures 5 and 6. In this example, the input member 120 may have reflecting portions on the underside of the input member 120 which may reflect signal 112 and the further signal 114 from sensor 111 and the further sensor 113 respectively.

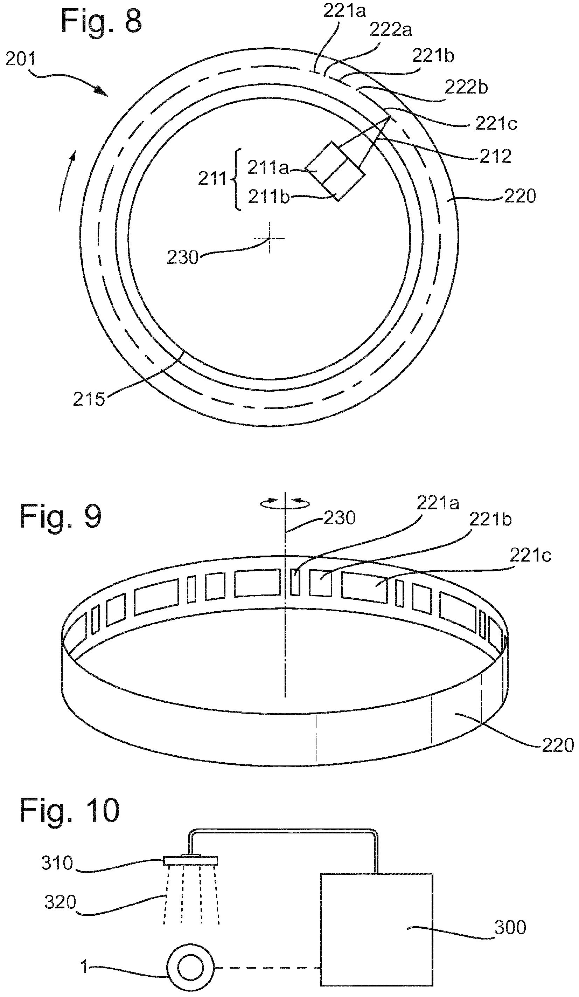

A third embodiment not according to the invention is depicted in Figures 8 and 9. The third embodiment may be substantially the same as the first embodiment or the second embodiment except as herein described. Unlike the first and second embodiments, in this embodiment, only one sensor may be provided in the controller 201, for example as depicted in Figure 8. Sensor 211 may comprise an emitting unit 211a and a detecting unit 211b which is potentially the same as the sensor, emitting unit and detecting unit (or the further sensor, the further emitting unit and the further detecting unit) as described above in relation to any of the embodiments or variations. Thus, in the third embodiment the reflector 221 may be positioned substantially parallel or perpendicular to the main axis 230.

This embodiment differs from the first and second embodiments in that only one sensor 211 (rather than two or more) is provided. In this embodiment, the reflective portions 221a, 221b and 221c may have a predetermined pattern such that the controller 201 can be used to determine the relative rotation (i.e. the direction and relative amount of rotation) of the input member 220 with respect to the control unit 210 as described below.

Any predetermined pattern may be used in order for the controller 201 to distinguish the amount of rotation of the reflecting portions 221a, 221b, 221c and thus the input member 220. However, in order for the direction of the rotation of the input member 220 to be determined with only one sensor 211, the reflector 221 may be arranged to have different predetermined lengths for at least three of the reflecting portions 221a, 221b, 221c, etc.. The predetermined lengths of the different reflecting portions 221a, 221b, 221c may be known.

Three different type of reflecting portion 221a, 221b, 221c may be provided wherein each type is of a different length to the other types. There may be multiple reflecting portions of each type. The different type of reflecting portion may be arranged successively. For example, as depicted in Figures 8 and 9, a first type of reflecting portion 221a may have a smaller length than a second type of reflecting portion 221b, which may have a smaller length than a third type of reflecting portion 221c. Thus, if the input member 220 is moved in the direction of the arrow, the detecting unit 213 will detect the third portion 221c, followed by the second portion 221b, followed by the first portion 221a. In other words, the detecting unit 213 detects a long portion, then a medium portion, then a short portion in this particular example. However, if the input member 220 is moved in the opposite direction, the controller will detect the first portion 221a, followed by the second portion 221b, followed by the third portion 221c. In other words, the detecting unit 213 detects a short portion, then a medium portion then a long portion in this particular example.

Providing portions of different lengths with at least three different lengths, e.g. as described, will allow the controller 201 to detect the direction of relative movement of the input member 220 with only one sensor. Thus, only one sensor may be used to determine the desired value of the characteristic of water flow being controlled.

Although the example depicted in Figures 8 and 9 includes a reflector with reflecting portions having three different lengths of increasing value, this is only exemplary. More than three different lengths may be used. Additional types of reflecting portion may be provided, for example, there may be a fourth type of reflecting portion with a fourth predetermined length, and optionally a fifth type of reflecting portion with a fifth predetermined length, etc.. The reflecting portions do not have to be arranged in succession of increasing length, i.e. from shortest to longest or vice versa. To determine the direction of rotation of the input member 20, the arrangement of the different types of reflecting portion around the input member 20 should be known i.e. predetermined.

In the third embodiment, the predetermined pattern of the reflecting portions 221a, 221b, 221c and non-reflecting portions 222a, 222b allow the direction and amount of relative rotation to be determined. Thus, although only one sensor may be needed to determine direction and amount of relative rotation, additional sensors could also be provided.

As previously described, the controller 1, 101, 201 (of any of the embodiments) may be part of a water related system. Thus, the present invention provides a water related system using the controller 1, 101, 201 as described above, for example in relation to any one of embodiments. The water related device may be used to implement the change indicated by the input of the user determined by the controller 1, 101, 201. For example, the user may rotate the input member 20 clockwise to increase the temperature of water flow in a shower unit. The relevant rotation of the input member 20 may be determined by the controller 1, 101, 201 and a signal may be sent to a shower control unit 300 for example, as depicted in Figure 10. The shower control unit 300 may comprise a mixing valve, boiler or heater. The shower control unit 300 may then alter the temperature of the water 320 which is provided to the showerhead 310. Thus, the user may vary the characteristic of water flow to alter the characteristic to a desired value. Figure 10 depicts a water related device using controller 1 but the controllers 101 and 201, and their corresponding components as described in relation to the second and third embodiments respectively, may be used.

The orientation depicted and referred to in the description and drawings are used for reference only and for the purposes of explaining the invention. It will be understood that the orientation of the controller will depend on how the controller 1, 101, 201 is used and how it may be attached to an object or surface. The controller 1, 101, 201 may be fixed in a variety of ways.

## Claims

1. A controller (1) for a water related system, the controller (1) being configured to control a characteristic of water flow in the water related system, the controller (1) comprising:
a control unit (10) comprising a sensor (11) , the sensor comprising an emitting unit (11a) configured to emit a signal (12) and a detecting unit (11b) configured to detect the signal (12); and
an input member (20) being rotatable relative to the control unit (10), the input member (20) comprising a reflector (21) arranged to reflect the signal (12) towards the detecting unit (11b), wherein the reflector (21) is arranged to have reflecting portions (21a, 21b, 21c) configured to reflect the signal (12) and non-reflecting portions (22a, 22b) configured to not reflect the signal (12), wherein as the input member (20) is rotated relative to the control unit (10) the controller (1) is configured to determine the relative rotation of the input member (20) based on the reflected signal;
wherein the controller (1) is configured to determine an input based on the relative rotation of the input member;
wherein the input member (20) is configured to rotate about a main axis (30), and the reflecting portions (21a, 21b, 21c) are arranged in a radial pattern around the main axis (30); and
wherein the pattern has a phase, and the control unit (10) comprises two sensors (11, 13), wherein the second sensor (13) is positioned with respect to the first sensor (11) and the pattern such that the sensors (11, 13) are out of phase with each other with respect to the pattern,
further comprising a housing (15), wherein the housing (15) comprises the control unit (10) and the control unit is sealed by the housing with respect to the surrounding environment, and the input member (20) is separate from the housing (15).

2. The controller (1) of claim 1, wherein the input relates to a desired value of the characteristic of water flow being controlled.

3. The controller (1) of claim 1 or 2, wherein the input is used to navigate menu options provided by the controller (1).

4. The controller (1) of any one of the previous claims, wherein the reflecting portions (21a, 21b, 21c) of the reflector (21) are formed using a reflective coating or material

5. The controller (1) of any one of the previous claims, wherein the non-reflecting portions (22a, 22b) areformed using a non-reflective coating or material.

6. The controller (1) of any one of the previous claims, wherein the reflecting portions (21a, 21b, 21c) of the reflector (21) are formed using reflective labels and/or stickers.

7. The controller (1) of any one the previous claims, wherein the non-reflecting portions (22a, 22b) of the reflector (21) are formed using non-reflective labels and/or stickers.

8. The controller (1) of any one of the previous claims, wherein the reflector (21) is formed as a reflective strip wherein portions of non-reflective material are positioned over respective portions of the reflective strip.

9. The controller (1) of any one of the previous claims, wherein the input member (20) is ring-shaped.

10. The controller (1) of any one of the previous claims, wherein the reflector (21) is arranged substantially parallel to the main axis (30).

11. The controller (1) of any one of claims 1 to 9, wherein the reflector (21) is arranged in a plane substantially perpendicular to the main axis (30).

12. The controller (1) of any one of the previous claims, wherein the characteristic of water flow being controlled is the temperature of the water flow and/or flow rate of the water flow.

13. The controller (1) of any one of the previous claims, wherein the pattern is a repeating pattern.

14. The controller (1) of any one of the previous claims, wherein the pattern has uniform reflecting portions (21a, 21b, 21c) and/or uniform non-reflecting portions (22a, 22b).

15. A water related system comprising a controller (1) in accordance with any one of claims 1 to 14.

## Patentansprüche

1. Steuervorrichtung (1) für ein wasserbezogenes System, wobei die Steuervorrichtung (1) konfiguriert ist, um eine Eigenschaft des Wasserflusses in dem wasserbezogenen System zu steuern, wobei die Steuerung (1) Folgendes umfasst:
eine Steuereinheit (10), umfassend einen Sensor (11), wobei der Sensor eine Sendeeinheit (11a), die konfiguriert ist, um ein Signal (12) auszusenden, und eine Erfassungseinheit (11b) umfasst, die konfiguriert ist, um das Signal (12) zu erfassen; und
ein Eingabeelement (20), das relativ zur Steuereinheit (10) drehbar ist, wobei das Eingabeelement (20) einen Reflektor (21) umfasst, der so angeordnet ist, dass er das Signal (12) in Richtung der Erfassungseinheit (11b) reflektiert, wobei der Reflektor (21) so angeordnet ist, dass er reflektierende Abschnitte (21a, 21b, 21c) aufweist, die so konfiguriert sind, dass sie das Signal (12) reflektieren, sowie nichtreflektierende Abschnitte (22a, 22b) aufweist, die so konfiguriert sind, dass sie das Signal (12) nicht reflektieren, wobei die Steuervorrichtung (1) so konfiguriert ist, dass sie bei Drehung des Eingabeelements (20) relativ zur Steuereinheit (10) die relative Drehung des Eingabeelements (20) auf der Grundlage des reflektierten Signals bestimmt;
wobei die Steuervorrichtung (1) so konfiguriert ist, dass sie auf der Grundlage der relativen Drehung des Eingabeelements einen Eingabewert bestimmt;
wobei das Eingabeelement (20) so konfiguriert ist, dass es sich um eine Hauptachse (30) dreht, und die reflektierenden Abschnitte (21a, 21b, 21c) in einem radialen Muster um die Hauptachse (30) angeordnet sind; und
wobei das Muster eine Phase aufweist und die Steuereinheit (10) zwei Sensoren (11, 13) umfasst, wobei der zweite Sensor (13) in Bezug auf den ersten Sensor (11) und das Muster so positioniert ist, dass die Sensoren (11, 13) in Bezug auf das Muster phasenverschoben zueinander sind,
ferner umfassend ein Gehäuse (15), wobei das Gehäuse (15) die Steuereinheit (10) umfasst und die Steuereinheit durch das Gehäuse gegenüber der Umgebung abgedichtet ist, und das Eingabeelement (20) vom Gehäuse (15) getrennt ist.

2. Steuervorrichtung (1) nach Anspruch 1, wobei sich die Eingabe auf einen Sollwert der Eigenschaft des Wasserflusses, die gesteuert wird, bezieht.

3. Steuervorrichtung (1) nach Anspruch 1 oder 2, wobei die Eingabe zur Navigation der von der Steuervorrichtung (1) bereitgestellten Menüoptionen verwendet wird.

4. Steuervorrichtung (1) nach einem der vorstehenden Ansprüche, wobei die reflektierenden Abschnitte (21a, 21b, 21c) des Reflektors (21) unter Verwendung einer reflektierenden Beschichtung oder eines reflektierenden Materials ausgebildet sind.

5. Steuervorrichtung (1) nach einem der vorstehenden Ansprüche, wobei die nichtreflektierenden Abschnitte (22a, 22b) unter Verwendung einer nichtreflektierenden Beschichtung oder eines nichtreflektierenden Materials ausgebildet sind.

6. Steuervorrichtung (1) nach einem der vorstehenden Ansprüche, wobei die reflektierenden Abschnitte (21a, 21b, 21c) des Reflektors (21) unter Verwendung von reflektierenden Etiketten und/oder Aufklebern ausgebildet sind.

7. Steuervorrichtung (1) nach einem der vorstehenden Ansprüche, wobei die nichtreflektierenden Abschnitte (22a, 22b) des Reflektors (21) unter Verwendung von nichtreflektierenden Etiketten und/oder Aufklebern ausgebildet sind.

8. Steuervorrichtung (1) nach einem der vorstehenden Ansprüche, wobei der Reflektor (21) als reflektierender Streifen ausgebildet ist, wobei Abschnitte aus nichtreflektierendem Material über den jeweiligen Abschnitten des reflektierenden Streifens positioniert sind.

9. Steuervorrichtung (1) nach einem der vorstehenden Ansprüche, wobei das Eingabeelement (20) ringförmig ist.

10. Steuervorrichtung (1) nach einem der vorstehenden Ansprüche, wobei der Reflektor (21) im Wesentlichen parallel zur Hauptachse (30) angeordnet ist.

11. Steuervorrichtung (1) nach einem der Ansprüche 1 bis 9, wobei der Reflektor (21) in einer Ebene angeordnet ist, die im Wesentlichen senkrecht zur Hauptachse (30) verläuft.

12. Steuervorrichtung (1) nach einem der vorstehenden Ansprüche, wobei die Eigenschaft des Wasserflusses, die gesteuert wird, die Temperatur des Wasserflusses und/oder die Durchflussmenge des Wasserflusses ist.

13. Steuervorrichtung (1) nach einem der vorstehenden Ansprüche, wobei das Muster ein sich wiederholendes Muster ist.

14. Steuervorrichtung (1) nach einem der vorstehenden Ansprüche, wobei das Muster gleichmäßige reflektierende Abschnitte (21a, 21b, 21c) und/oder gleichmäßige nichtreflektierende Abschnitte (22a, 22b) aufweist.

15. Wasserbezogenes System, das eine Steuervorrichtung (1) nach einem der Ansprüche 1 bis 14 umfasst.

## Revendications

1. Dispositif de régulation (1) pour un système en rapport avec l'eau, le dispositif de régulation (1) étant conçu pour réguler une caractéristique d'écoulement d'eau dans le système en rapport avec l'eau, le dispositif de régulation (1) comprenant :
une unité de régulation (10) comprenant un capteur (11), le capteur comprenant une unité d'émission (11a) conçue pour émettre un signal (12) et une unité de détection (11b) conçue pour détecter le signal (12), et
un élément d'entrée (20) pouvant tourner par rapport à l'unité de régulation (10), l'élément d'entrée (20) comprenant un réflecteur (21) agencé pour réfléchir le signal (12) vers l'unité de détection (11b), le réflecteur (21) étant agencé de façon à présenter des portions réfléchissantes (21a, 21b, 21c) conçues pour réfléchir le signal (12) et des portions non réfléchissantes (22a, 22b) conçues pour ne pas réfléchir le signal (12), étant entendu que, lorsque l'élément d'entrée (20) tourne par rapport à l'unité de régulation (10), le dispositif de régulation (1) est conçu pour déterminer la rotation relative de l'élément d'entrée (20) en fonction du signal réfléchi ;
ledit dispositif de régulation (1) étant conçu pour déterminer une entrée en fonction de la rotation relative de l'élément d'entrée,
ledit élément d'entrée (20) étant conçu pour tourner sur un axe principal (30), et lesdites portions réfléchissantes (21a, 21b, 21c) étant agencées selon un motif radial autour de l'axe principal (30), et
ledit motif présentant une phase, et ladite unité de régulation (10) comprenant deux capteurs (11, 13), le deuxième capteur (13) étant positionné par rapport au premier capteur (11) et au motif de telle façon que les capteurs (11, 13) sont déphasés l'un par rapport à l'autre eu égard au motif ;
comprenant en outre un boîtier (15), le boîtier (15) comprenant l'unité de régulation (10) et l'unité de régulation étant isolée de l'environnement extérieur par le boîtier, et l'élément d'entrée (20) étant distinct du boîtier (15).

2. Dispositif de régulation (1) selon la revendication 1, dans lequel l'entrée se rapporte à une valeur souhaitée de la caractéristique d'écoulement d'eau à réguler.

3. Dispositif de régulation (1) selon la revendication 1 ou 2, dans lequel l'entrée sert à naviguer parmi des options de menu offertes par le dispositif de régulation (1).

4. Dispositif de régulation (1) selon l'une quelconque des revendications précédentes, dans lequel les portions réfléchissantes (21a, 21b, 21c) du réflecteur (21) sont constituées au moyen d'un revêtement ou matériau réfléchissant.

5. Dispositif de régulation (1) selon l'une quelconque des revendications précédentes, dans lequel les portions non réfléchissantes (22a, 22b) sont constituées au moyen d'un revêtement ou d'un matériau non réfléchissant.

6. Dispositif de régulation (1) selon l'une quelconque des revendications précédentes, dans lequel les portions réfléchissantes (21a, 21b, 21c) du réflecteur (21) sont constituées au moyen d'étiquettes et/ou autocollants réfléchissants.

7. Dispositif de régulation (1) selon l'une quelconque des revendications précédentes, dans lequel les portions non réfléchissantes (22a, 22b) du réflecteur (21) sont constituées au moyen d'étiquettes et/ou autocollants non réfléchissants.

8. Dispositif de régulation (1) selon l'une quelconque des revendications précédentes, dans lequel le réflecteur (21) est constitué sous la forme d'une bande réfléchissante, des portions de matériau non réfléchissant étant disposées sur diverses portions de la bande réfléchissante.

9. Dispositif de régulation (1) selon l'une quelconque des revendications précédentes, dans lequel l'élément d'entrée (20) est de forme annulaire.

10. Dispositif de régulation (1) selon l'une quelconque des revendications précédentes, dans lequel le réflecteur (21) est agencé sensiblement parallèlement à l'axe principal (30).

11. Dispositif de régulation (1) selon l'une quelconque des revendications 1 à 9, dans lequel le réflecteur (21) est agencé dans un plan sensiblement perpendiculaire à l'axe principal (30).

12. Dispositif de régulation (1) selon l'une quelconque des revendications précédentes, dans lequel la caractéristique d'écoulement d'eau à réguler est la température de l'écoulement d'eau et/ou le débit de l'écoulement d'eau.

13. Dispositif de régulation (1) selon l'une quelconque des revendications précédentes, dans lequel le motif est un motif répétitif.

14. Dispositif de régulation (1) selon l'une quelconque des revendications précédentes, dans lequel le motif présente des portions réfléchissantes (21a, 21b, 21c) uniformes et/ou des portions non réfléchissantes (22a, 22b) uniformes.

15. Système en rapport avec l'eau comprenant un dispositif de régulation (1) selon l'une quelconque des revendications 1 à 14.
